(19) Europäisches Patentamt
European Patent Office
Office européen des brevets

(11) **EP 4 625 008 A1**

(12) **EUROPEAN PATENT APPLICATION**
published in accordance with Art. 153(4) EPC

(43) Date of publication:
01.10.2025 Bulletin 2025/40

(21) Application number: 23905802.7

(22) Date of filing: 14.12.2023

(51) International Patent Classification (IPC):
*G02B 6/02* (2006.01)   *H01S 3/067* (2006.01)

(52) Cooperative Patent Classification (CPC):
C03B 37/014; C03B 37/027; G02B 6/02;
G02F 1/39; H01S 3/067

(86) International application number:
PCT/CN2023/138832

(87) International publication number:
WO 2024/131637 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.12.2022 CN 202211649609

(71) Applicant: Huawei Technologies Co., Ltd.
Shenzhen, Guangdong 518129 (CN)

(72) Inventors:
• LIU, Yehui
Shenzhen, Guangdong 518129 (CN)
• CAO, Shiyi
Shenzhen, Guangdong 518129 (CN)
• LI, Jinyan
Wuhan, Hubei 430074 (CN)
• CHU, Yingbo
Wuhan, Hubei 430074 (CN)

(74) Representative: Epping - Hermann - Fischer
Patentanwaltsgesellschaft mbH
Schloßschmidstraße 5
80639 München (DE)

(54) **OPTICAL FIBER, METHOD FOR PREPARING OPTICAL FIBER, AND OPTICAL FIBER AMPLIFIER**

(57) Embodiments of this application provide an optical fiber, an optical fiber preparation method, and an optical fiber amplifier. Proportions of the element erbium, the element aluminum, and the element phosphorus are adjusted during optical fiber preparation, so that aluminum phosphate is formed around the element erbium in a prepared optical fiber, a probability that the element erbium in the optical fiber transits to a high energy level is reduced, and an excited-state absorption effect of the element erbium in the optical fiber on an optical signal is suppressed.

FIG. 3

**Description**

This application claims priority to Chinese Patent Application No. 202211649609.2, filed with the China National Intellectual Property Administration on December 21, 2022 and entitled "OPTICAL FIBER, OPTICAL FIBER PREPARATION METHOD, AND OPTICAL FIBER AMPLIFIER", which is incorporated herein by reference in its entirety.

**TECHNICAL FIELD**

This application relates to the field of optical communication, and more specifically, to an optical fiber, an optical fiber preparation method, and an optical fiber amplifier.

**BACKGROUND**

With the rapid development of an information era and advent of a big data era, a large-capacity data transmission system is urgently needed. Based on an existing optical fiber transmission system, how to further improve a communication capacity has become a research hotspot in the field of optical communication. Generally, the communication capacity is improved from the following three aspects: 1. Increase a transmission rate of a channel. 2. Reduce channel spacing. 3. Increase a transmission bandwidth. In the long run, increasing the transmission bandwidth is a fundamental method for implementing long-distance, high-speed, and bit-error-free transmission. For an entire transmission system, an increase in a system transmission bandwidth requires that a working range of another component also matches a corresponding bandwidth. Therefore, a to-be-developed erbium-doped fiber (erbium-doped fiber, EDF) amplifier (erbium-doped fiber amplifier, EDFA) should have features such as high gain, low noise, and wide band, and realize flatness and locking of a gain spectrum in a wide wavelength range. This also puts forward a higher performance indicator for the EDF in the EDFA.

After a long period of exploration, light within a long-wavelength band (Long-wavelength Band, L-Band) has minimal dispersion-induced signal distortion and lowest attenuation, and therefore, is most suitable for transmission in an optical fiber. However, in the EDF, when L-band signal light is input, a difference between energy of a long band of the L-band and an energy level $^4I_{13/2}$ is close to a difference between the energy level $^4I_{13/2}$ and an energy level $^4I_{9/2}$. In this case, an upper-energy-level erbium ion in a metastable state can easily transit to the energy level $^4I_{9/2}$ after absorbing a long-band signal photon. Consequently, a signal in the long band of the L-band is attenuated, and an existing EDFA cannot effectively amplify an L-band optical signal.

**SUMMARY**

This application provides an optical fiber, an optical fiber preparation method, and an optical fiber amplifier, which can suppress an excited-state absorption effect of the element erbium in an optical fiber on an optical signal.

According to a first aspect, an optical fiber is provided. The optical fiber is used in an optical fiber amplifier, and the optical fiber is for amplifying an optical signal. A fiber core of the optical fiber includes the element erbium, the element aluminum, and the element phosphorus, and aluminum phosphate is formed around the element erbium.

According to the optical fiber provided in this application, aluminum phosphate is formed around the element erbium, so that a clustering degree of the element erbium can be reduced, and a probability that the element erbium transits to a higher energy level can be reduced, thereby suppressing an excited-state absorption effect of the element erbium in the optical fiber on the optical signal.

With reference to the first aspect, in some implementations of the first aspect, a mass percentage of the element erbium is 0.2% to 1%, a mass percentage of the element aluminum is 0.5% to 20%, and a mass percentage of the element phosphorus is 2% to 30%.

Optionally, the mass percentage of the element erbium is 0.2% to 0.6%, the mass percentage of the element aluminum is 6% to 11%, and the mass percentage of the element phosphorus is 15% to 22%.

Optionally, the mass percentage of the element erbium is 0.2% to 0.3%, the mass percentage of the element aluminum is 6% to 7%, and the mass percentage of the element phosphorus is 15% to 16%.

The proportions of the element erbium, the element aluminum, and the element phosphorus in the optical fiber are adjusted, so that the optical fiber can obtain a high gain for an optical signal in an L-band.

Optionally, the mass percentage of the element erbium is 0.5% to 0.6%, the mass percentage of the element aluminum is 10% to 11%, and the mass percentage of the element phosphorus is 21% to 22%.

The proportions of the element erbium, the element aluminum, and the element phosphorus in the optical fiber are adjusted, so that the optical fiber can obtain a higher gain for an optical signal in the L-band.

Specifically, an amount of aluminum phosphate formed around the element erbium may be determined based on content of the element aluminum and the element phosphorus in the optical fiber. When the content of the element aluminum and the element phosphorus is high, more aluminum phosphate is formed around the element erbium. When the content of the element aluminum and the element phosphorus is low, less aluminum phosphate is formed around the element erbium.

With reference to the first aspect, in some implementations of the first aspect, the fiber core further includes at least one of the following elements: germanium Ge, silicon Si, thulium Tm, bismuth Bi, fluorine F, cerium Ce, ytterbium Yb, zirconium Zr, neodymium Nd, and lanthanum La. A mass percentage of the element germanium is 0.01% to 30%, and a mass percentage of the element silicon is greater than 60%.

With reference to the first aspect, in some implementations of the first aspect, a fiber diameter of the optical fiber is 1 $\mu$m to 20 $\mu$m, and a numerical aperture of the optical fiber is 0.01 to 1.2.

According to a second aspect, an optical fiber preparation method is provided. The method includes: depositing a loose layer on an inner wall of a quartz glass tube; immersing, in a first solution, the quartz glass tube on which the loose layer is deposited, to allow the elements in the first solution to penetrate into the loose layer, where the first solution includes the element erbium, the element aluminum, and the element phosphorus, a concentration of the element erbium is 0.1 mole per liter (mol/L) to 0.3 mol/L, a concentration of the element aluminum is 1 mol/L to 6 mol/L, and a concentration of the element phosphorus is 0.5 mol/L to 4 mol/L; sintering the quartz glass tube that has been immersed in the first solution, to dope the elements in the first solution into the quartz glass tube; and drawing the sintered quartz glass tube into an optical fiber.

Specifically, the loose layer may be deposited on the inner wall of the quartz glass tube by using a chemical vapor deposition (chemical vapor deposition, CVD) method, or the loose layer may be deposited on the inner wall of the quartz glass tube by using a modified chemical vapor deposition (modified chemical vapor deposition, MCVD) method. This is not limited in this application. Specifically, the loose layer may be a soot layer, and is for providing a doping environment for a plurality of elements in the first solution.

Specifically, the "first solution includes the element erbium, the element aluminum, and the element phosphorus" may also be understood as that the first solution includes erbium ions, aluminum ions, and phosphorus ions.

According to the foregoing method, appropriate amounts of the element erbium, the element aluminum, and the element phosphorus may be doped into the optical fiber, and aluminum phosphate may be formed around the element erbium of a fiber core of an optical fiber, so that a clustering degree of the element erbium can be reduced, and a probability that the element erbium transits to a higher energy level can be reduced, thereby suppressing an excited-state absorption effect of the element erbium in the optical fiber on an optical signal.

Optionally, in the first solution, a concentration of the element erbium is 0.1 mole per liter (mol/L) to 0.3 mol/L, a concentration of the element aluminum is 3 mol/L to 6 mol/L, and a concentration of the element phosphorus is 2 mol/L to 4 mol/L.

Optionally, in the first solution, the concentration of the element erbium is 0.1 mol/L to 0.2 mol/L, the concentration of the element aluminum is 3 mol/L to 4 mol/L, and the concentration of the element phosphorus is 2 mol/L to 3 mol/L.

By adjusting a concentration ratio of the element erbium, the element aluminum, and the element phosphorus in the first solution, the prepared optical fiber can obtain a high gain for an optical signal in an L-band.

Optionally, in the first solution, the concentration of the element erbium is 0.2 mol/L to 0.3 mol/L, the concentration of the element aluminum is 5 mol/L to 6 mol/L, and the concentration of the element phosphorus is 3 mol/L to 4 mol/L.

By adjusting a concentration ratio of the element erbium, the element aluminum, and the element phosphorus in the first solution, the prepared optical fiber can obtain a higher gain in the L-band. With reference to the second aspect, in some implementations of the second aspect, the first solution further includes at least one of the following elements: thulium Tm, bismuth Bi, fluorine F, cerium Ce, ytterbium Yb, zirconium Zr, neodymium Nd, and lanthanum La.

With reference to the second aspect, in some implementations of the second aspect, a fiber diameter of the prepared optical fiber is 1 $\mu$m to 20 $\mu$m, and a numerical aperture of the prepared optical fiber is 0.01 to 1.2.

With reference to the second aspect, in some implementations of the second aspect, immersing, in the first solution, the quartz glass tube on which the loose layer is deposited includes: immersing, in the first solution for three to six hours, the quartz glass tube on which the loose layer is deposited. Optionally, the quartz glass tube on which the loose layer is deposited may also be immersed in the first solution for five hours.

With reference to the second aspect, in some implementations of the second aspect, the sintering the quartz glass tube that has been immersed in the first solution includes: sintering, in an oxygen atmosphere, the quartz glass tube that has been immersed in the first solution, where a temperature of the sintering is 1400 degrees Celsius (°C) to 1900 degrees Celsius.

Optionally, the sintering temperature may alternatively be 1500 degrees Celsius (°C) to 1700 degrees Celsius.

According to the foregoing sintering process, doped ions from the first solution may react with oxygen, and the doped ions enter a quartz glass structure due to pore collapse and vitrification.

With reference to the second aspect, in some implementations of the second aspect, the sintering the quartz glass tube that has been immersed in the first solution includes: sintering, in an atmosphere containing the element phosphorus, the quartz glass tube that has been immersed in the first solution.

Specifically, the atmosphere containing the element phosphorus may be provided by $POCl_3$, or may be provided by another phosphorus-containing material. This is not limited in this application. According to a third aspect, an optical fiber amplifier is provided. The optical fiber amplifier includes an optical fiber for amplifying an optical signal, and the optical fiber may be the optical fiber provided in the first aspect and various implementations of the first aspect.

**BRIEF DESCRIPTION OF DRAWINGS**

FIG. 1 is a diagram of an energy level according to this application;
FIG. 2 is a diagram of preparing an optical fiber preform according to this application;
FIG. 3 is a diagram of a micro coordination environment in which a rare-earth element is doped according to this application;
FIG. 4 is a diagram of an apparatus for gain testing of an optical fiber according to this application;
FIG. 5 shows an example of a gain spectrum of an optical fiber according to this application;
FIG. 6 is a diagram of another apparatus for gain testing of an optical fiber according to this application;
FIG. 7 shows an example of another gain spectrum of an optical fiber according to this application;
FIG. 8 shows an example of still another gain spectrum of an optical fiber according to this application; and
FIG. 9 shows an example of a system architecture diagram of an optical fiber amplifier according to this application.

**DESCRIPTION OF EMBODIMENTS**

The following describes technical solutions of this application with reference to accompanying drawings.
For ease of understanding, terms or concepts that may be used in embodiments of this application are first described before embodiments of this application are described. It should be understood that, basic concepts described below are briefly described by using disclosure in the current related technology as an example, and specific names are not limited in this application.

1. Bridging oxygen bond and non-bridging oxygen bond

In inorganic nonmetallic materials, crystal structures of silicate have a common characteristic, to be specific, all the crystal structures of silicate have a $[SiO_4]$ tetrahedron, and a silicate structure law is derived from this; for example, a $[PO_4]$ tetrahedron, a $[BO_4]$ tetrahedron, a $[BO_4]$ triangle, an $[AlO_4]$ tetrahedron, and an $[AlO_4]$ octahedron. In the crystal structures of silicate minerals, a most basic structural unit is Si-O complex anion. All silicate minerals belong to tetraoxysilicate, except that Si4+ in a structure of thaumasite has six-fold coordination, forming a Si-O6 coordination octahedron that belongs to hexaoxysilicate. Si4+ in tetraoxysilicate has four-fold coordination, forming a Si-O4 coordination tetrahedron. Such silicon-oxygen tetrahedrons may exist in isolation in a structure, and are connected to each other by another metal cation, that is, connected to each other by a non-bridging oxygen bond. However, the silicon-oxygen tetrahedrons may alternatively be interconnected by sharing $O_2$- (which is called a bridging oxygen) at a corner, to form so-called silicon-oxygen backbones of tetrahedrons in different connection forms such as group, ring, chain, layer, and frame. The silicon-oxygen backbones are connected by another metal cation. Therefore, the bridging oxygen refers to an oxygen ion at a corner shared by two silicon-oxygen tetrahedrons, that is, the oxygen ion that acts as a "bridge". Conversely, an oxygen ion that is bonded to only one silicon-oxygen tetrahedron and is not shared by two silicon-oxygen tetrahedrons is a non-bridging oxygen. The non-bridging oxygen represents a fracture degree of a silicon-oxygen network, and unsaturated valence of the non-bridging oxygen is neutralized by cations outside the silicon-oxygen tetrahedron.

2. Excited-state absorption (excited-state absorption, ESA)

An upper-energy-level particle in a metastable state is in an excited state, and one or more higher energy levels may exist above a metastable-state energy level. When a wavelength of incident light is close to an energy difference between the metastable-state energy level and the one or more higher energy levels that exist above the metastable-state energy level, the upper-energy-level particle in the metastable state can easily absorb energy at the wavelength of the incident light and transit to the one or more higher energy levels that exist above the metastable-state energy level, resulting in attenuation of a signal emitted through stimulated radiation at the wavelength of the incident light.

3. Upconversion luminescence

Stokes law holds that a material can only be excited by high-energy light and emit low-energy light. To be specific, after being excited by short-wavelength and high-frequency light, the material emits long-wavelength and low-frequency light. The upconversion luminescence is contrary to the Stokes law. The upconversion luminescence refers to that a material is excited by low-energy light and emits high-energy light. To be specific, after being excited by long-wavelength and low-frequency light, the material emits short-wavelength and high-frequency light.

The upconversion luminescence is a process of ESA. A principle of the upconversion luminescence is in which a same ion transits from a ground state to an excited state with higher energy through continuous multiphoton absorption. This is a basic process of the upconversion luminescence.

4. Wavelength division multiplexing (wavelength division multiplexing, WDM) technology

The WDM technology is a technology in which optical carrier signals of at least two different wavelengths are converged at a transmit end by using a multiplexer, and are coupled to a same optical fiber of an optical line for transmission. At a receive end, the optical carrier signals of various wavelengths are separated by using a demultiplexer, and then an optical receiver performs further processing to restore the original signals. The technology used for transmitting optical signals of two or more different wavelengths over a same optical fiber is referred to as the WDM technology.

With the rapid development of an information era and advent of a big data era, a large-capacity data transmission system is urgently needed. Based on an existing optical fiber transmission system, how to further improve a communication capacity has become a research hotspot in the field of optical communication. Generally, the communication capacity is improved from the following three aspects: 1. Increase a transmission rate of a channel. 2. Reduce channel spacing. 3. Increase a transmission bandwidth. In the long run, increasing the transmission bandwidth is a fundamental method for implementing long-distance, high-speed, and bit-error-free transmission. For an entire transmission system, an increase in a system transmission bandwidth requires that a working range of another component also matches a corresponding bandwidth. Therefore, a to-be-developed erbium-doped fiber (erbium-doped fiber, EDF) amplifier (erbium-doped fiber amplifier, EDFA) should have features such as high gain, low noise, and wide band, and realize flatness and locking of a gain spectrum in a wide wavelength range. This also puts forward a higher performance indicator for the EDF in the EDFA.

After a long period of exploration, light within a long-wavelength band (Long-wavelength Band, L-Band) has minimal dispersion-induced signal distortion and lowest attenuation, and therefore, is most suitable for transmission in an optical fiber. However, due to an amplification feature of the long-wavelength band (that is, the L-band), an existing EDFA cannot effectively amplify an optical signal in the L-band. Specifically, light within the L-band range refers to light with a wavelength range of 1260 nm to 1625 nm. Currently, an L-band amplifier provides coverage up to around 1610 nm only, and cannot achieve a high gain for an optical signal greater than 1610 nm in the L-band. Therefore, how to fully use an effective bandwidth of the L-band greater than 1610 nm is a main direction for improving the communication capacity.

Currently, an erbium-doped fiber amplifier based on tellurium-based glass can implement optical amplification in the L-band. Tellurate glass contains two kinds of bonding modes, namely, covalent bond and ionic bond, and there are lone-pair electrons besides a basic structural constitutional unit. The erbium-doped fiber amplifier based on the tellurium-based glass has the following advantages: **1.** In rare-earth ion-doped fibers, rare-earth ions can occupy a diverse range of lattice sites, and crystal field strength sensed by rare-earth ions in different lattice sites slightly varies. This causes a series of slightly varying energy distribution at a specific Stark energy level, resulting in inhomogeneous broadening of absorption spectrum and emission spectrum of the rare-earth ions, thereby facilitating bandwidth enlargement. 2. The tellurium-based glass has a high refractive index (about 2.0), which is beneficial to obtain a large stimulated emission cross-section. 3. The tellurate glass has low phonon energy, which may reduce a radiationless relaxation rate in the tellurate glass and increase radiative quantum efficiency, thereby facilitating obtaining a high-efficiency laser and amplifier. 4. Compared with an erbium-doped fiber amplifier based on a quartz substrate, an erbium-doped fiber amplifier based on the tellurate glass has higher rare-earth doping solubility, which is one to two orders of magnitude greater. This facilitates effective absorption of pump light and obtaining of a high gain per unit length, to reduce a fiber length required for achieving a specific gain, and help implement component miniaturization. According to theoretical analysis, a limit of the L-band that can be implemented by the erbium-doped fiber amplifier based on the tellurate glass is 1630+ nm. Therefore, the erbium-doped fiber amplifier based on the tellurate glass provides an important choice path for implementing amplification of wide-spectrum light in the L-band. However, the composition materials of the tellurite glass directly affect a formation ability, thermal stability, a refractive index, a rare-earth ion doping concentration and a rare-earth ion spectral characteristic of the glass. Currently, a melting temperature of the tellurite glass for implementing optical amplification in the L-band is about 600°C, and a glass softening temperature is relatively low. With an excessively high refractive index, the tellurite glass is subject to large butting or fusion losses during fiber butting or fiber fusion with a passive erbium-doped fiber. The fusion loss may be greater than 0.5 dB. As a result, performance of the amplifier is greatly affected. Glass is brittle in mechanical properties, and when drawn into an optical fiber, the brittleness of the glass affects subsequent use processes, and the glass is not convenient for extensive use. In addition, most tellurate glass prepared by using a fusion method has a high requirement on purity of raw materials, further increasing costs of preparing the erbium-doped fiber based on the tellurate glass are further increased.

In addition, a semiconductor optical amplifier (semiconductor optical amplifier, SOA) can also implement optical amplification in the L-band. The SOA is a semiconductor laser with or without end surface reflection, and a structure and an operating principle thereof are similar to those of a semiconductor laser. When a bias current is applied to a component, the current may cause population inversion of a semiconductor gain material, so that an electron transits from a valence band to a conduction band, thereby generating spontaneous radiation. When an external light field is incident, stimulated radiation occurs, and the stimulated radiation generates signal gain. The SOA has the following advantages: 1. Optical amplification of a band ranging from 850 nm to 1600 nm may be implemented by selecting semiconductor materials of different gain media. For example, the semiconductor materials of different gain media may be a III-V compound semiconductor InGaAsP. 2. Currently, a gain of the SOA may reach more than 30 dB, and the SOA has a simple structure and a small size, and can fully use an existing semiconductor laser technology. The SOA has a mature manufacturing process, low costs, a long life, and low power consumption, and is easy to be integrated with other components. The SOA has a potential of supporting ultra-wide broadband data transmission, and is expected to implement amplification of an ultra-wide spectrum covering an L++ band. However, because the SOA needs to match an existing transmission system, a signal amplified by the SOA needs to be coupled to a conventional optical fiber. Currently, a coupling loss is still large, and is about 3 dB to 8 dB. If coupling the signal amplified by the SOA to the traditional optical fiber is used as a first stage of an amplifier, a noise figure is correspondingly degraded. Because a gain of the SOA is related to factors such as polarization state and temperature, stability of the SOA is poor. At high output power, because the gain of the SOA changes with a signal, there is a serious non-linear distortion problem, causing further degradation of system performance.

In addition, a fiber Raman amplifier (fiber raman amplifier, FRA) can also implement optical amplification in the L-band. The FRA is an optical amplifier based on a stimulated Raman scattering (stimulated raman scattering, SRS) mechanism, and an operating principle thereof is as follows: Power of a small part of incident light is transferred to a Stokes wave whose frequency is lower than the incident light. If a weak signal and a strong signal are transmitted in an optical fiber at the same time, and the weak signal is long-lasted within a Raman gain bandwidth of pump light, weak signal light is amplified. FRA has the following advantages: 1. The gain medium is an ordinary optical fiber for transmission, and has good compatibility with an optical fiber system. 2. A gain wavelength is determined by a wavelength of the pump light and is not affected by another factor. Theoretically, signal light of any wavelength can be amplified as long as the wavelength of the pump light is proper. 3. The FRA has a high gain, small crosstalk, a low noise figure, and a wide spectrum range. Optical amplification may be performed within a spectrum range of 1292 nm to 1660 nm, to obtain a gain bandwidth wider than the EDFA, so that the communication system extends to the limit of the L-band. However, the FRA needs a pump laser with extra high power when performing amplification on the L-band. In addition, most FRAs use a distributed amplification structure. For a long-distance transmission system, the FRA may be used as an auxiliary amplification manner of the EDFA and is difficult to be used independently. Changes of pump power and an optical fiber length of the FRA affect a final output gain and output flatness, limiting application scenarios.

For ease of understanding, in the following, an L-band of 1600 nm to 1625 nm is referred to as a long band, and an L-band of 1260 nm to 1600 nm is referred to as a short band. It should be understood that the long band herein may be considered as a band whose ESA effects affects an optical wave gain of the L-band. It should be noted that, a division boundary between the long band and the short band of the L-band is not necessarily 1600 nm, and may be 1610 nm or the like. The following uses an example in which the division boundary between the long band and the short band is 1600 nm for description, which constitutes no limitation.

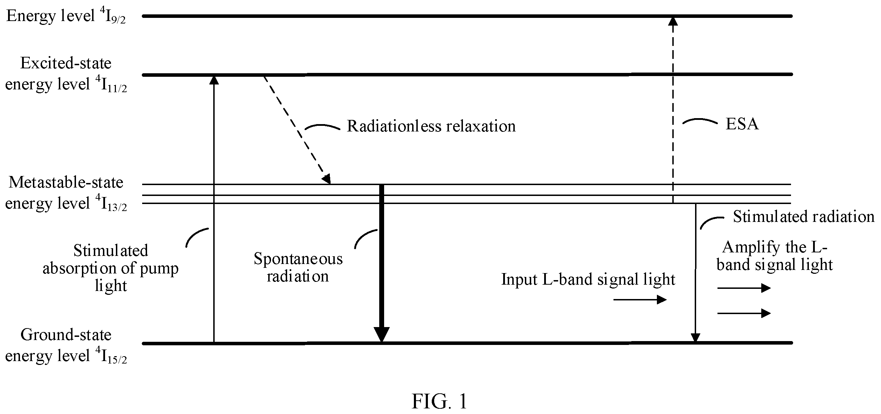

In the erbium-doped fiber, a local coordination environment of an erbium ion determines a characteristic of an emission spectrum. After absorbing the pump light, an erbium ion at a ground-state energy level transits to an excited-state energy level $^4I_{11/2}$. As shown in FIG. 1, a life of the erbium ion at the excited-state energy level $^4I_{11/2}$ is on an order of magnitude of 10 microseconds ($\mu$s), and therefore, the erbium ion quickly transits to a metastable-state energy level $^4I_{13/2}$ through radiationless relaxation. After transition to the metastable-state energy level $^4I_{13/2}$ through radiationless relaxation, the erbium ion performs spontaneous radiation, and the life of the erbium ion at the metastable-state energy level $^4I_{13/2}$ is about 10 milliseconds (ms). When L-band signal light is input, energy of the long band of the L-band is close to an energy difference between the energy level $^4I_{13/2}$ and the energy level $^4I_{9/2}$. In this case, an upper-energy-level erbium ion in the metastable state can easily transit to the energy level $^4I_{9/2}$ after absorbing a long-band signal photon. This is an ESA process of the erbium ion, resulting in attenuation of a signal in the long band of the L-band. A part of long-band signal light is amplified through stimulated radiation. Specifically, the pump light absorbed by the erbium ion at the ground-state energy level may be a light wave with a wavelength of 980 nanometers (nm). This is not limited in this application. Therefore, the ESA process affects the gain and noise of the amplifier in the long band of the L-band, and is a critical limitation that restricts the gain in the long band of the L-band. Specifically, a gain of the EDF mainly depends on the following formula 1:

$$G(\lambda) \sim \exp\left\{ \int_0^L \left[ \sigma_e(\lambda)\frac{N_2(z)}{N} - \sigma_a(\lambda)\frac{N_1(z)}{N} \right] dz \right\} \qquad \text{Formula 1}$$

In formula 1, $\sigma_e$ is a radiation cross section of the EDF, $\sigma_a$ is an absorption cross section of the EDF, $N_2(z)$ is a quantity of upper-energy-level particles of the EDF, $N_1(z)$ is a quantity of lower-energy-level particles of the EDF, N is a total quantity of particles of the EDF, and G is a gain of the EDF.

In addition, $\sigma_e$ in formula 1 mainly depends on the following formula 2:

$$\sigma_e = g_{21} - g_{ESA} \qquad \text{Formula 2}$$

In formula 2, $g_{21}$ is a measured radiation coefficient of the EDF, and $g_{ESA}$ is an excited-state absorption coefficient of a signal. Larger $g_{ESA}$ indicates fewer advantages to a signal gain in the long band of the L-band.

In addition, $\sigma_a(\lambda)$ in formula 1 mainly depends on the following formula 3:

$$\sigma_a(\lambda) = g_{21} e^{\left(\frac{h\nu - E_0}{k_B T}\right)} \qquad \text{Formula 3}$$

In formula 3, h is a Planck constant, v is a corresponding light frequency, $E_0$ is zero-phonon-line energy, $k_B$ is a Boltzmann constant, and T is a Kelvin temperature.

An ESA effect of the upper-energy-level particle can exist when the signal light of the long band of the L-band is input. In addition, longer time for which a reversed upper-energy-level particle remains in the metastable-state energy level $^4I_{13/2}$ indicates a larger probability of occurrence of the ESA, resulting in limitation of the gain in the long band of the L-band.

To resolve the foregoing problem, this application provides a method for preparing an L-band erbium-doped fiber with a high gain and low noise, to implement a wide spectrum and a high gain of the L-band.

In this application, a doping concentration of the erbium ions is greatly increased to shorten a life of an erbium ion in the metastable-state energy level $^4I_{13/2}$ in the EDF, thereby reducing the ESA effect.

This application is described in detail by using an example in which a modified chemical vapor deposition (modified chemical vapor deposition, MCVD) method is used to prepare the EDF that can implement the wide spectrum and the high gain of the L-band. However, in this application, a method for preparing the EDF that can implement the wide spectrum and the high gain of the L-band is not limited to the MCVD method.

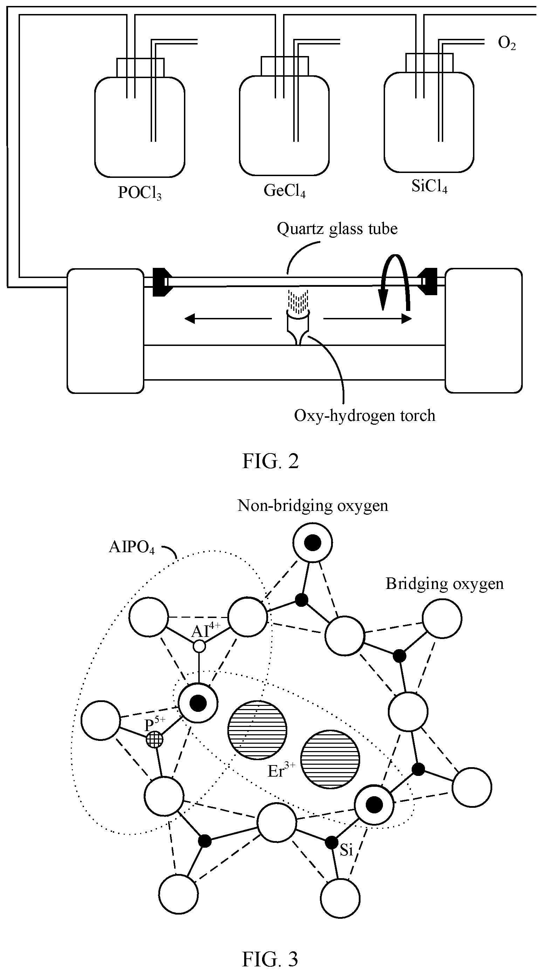

FIG. 2 is a diagram of preparing, based on the MCVD method, the EDF that can implement the wide spectrum and the high gain of the L-band, and the method includes the following steps: Step 1: Mount a hollow quartz glass tube on a coaxially rotating lathe.

Step 2: Pass Silicon tetrachloride $SiCl_4$, doped gas, and oxygen $O_2$ into the quartz glass tube, and cause an oxy-hydrogen torch to move along an axial direction of the quartz glass tube at a uniform speed, to heat an outer surface of the quartz glass tube.

Specifically, the $SiCl_4$, the doped gas, and the $O_2$ that are passed into the quartz glass tube undergo high-temperature oxidation reaction under a heating condition of the oxy-hydrogen torch, to generate fine particles such as silicon dioxide $SiO_2$, phosphorus pentoxide $P_2O_5$, silicon oxyfluoride, and boron trioxide $B_2O_3$. Driven by the thermophoresis effect and gas in the tube, the fine particles are deposited and attached to an inner surface of the quartz glass tube.

When a heating temperature is 1300°C to 1600°C, a white opaque soot (soot) layer is formed on the inner surface of the quartz glass tube, and the formed soot layer is about 150 millimeters (mm) to 400 mm long.

Specifically, the soot layer on the inner surface of the quartz glass tube mainly provides a doping environment for ions to be doped through liquid-phase and gas-phase subsequently.

Step 3: Immerse the quartz glass tube formed with the soot layer into a mixed solution 1, and keep the lathe rotating in an immersion process, so that the doped ions in the mixed solution 1 penetrate into the soot layer through surface adsorption of the soot layer.

Specifically, the mixed solution 1 is prepared by dissolving a specific ratio of raw materials including the erbium ions $Er^{3+}$, the phosphorus ions $P^{5+}$, and the aluminum ions $Al^{3+}$ into a hydrochloric acid solution or an alcohol solution. This process needs to be performed in an ultraclean environment.

Specifically, concentrations of the erbium ions $Er^{3+}$, the phosphorus ions $P^{5+}$, and the aluminum ions $Al^{3+}$ in the mixed solution 1 are respectively 0.12 mole per liter (mol/l), 2.2 mol/l, and 3.1 mol/l.

Specifically, a raw material containing the erbium ions $Er^{3+}$ may be erbium oxide $Er_2O_3$, a raw material containing the phosphorus ions $P^{5+}$ may be $P_2O_5$, and a raw material containing the aluminum ions $Al^{3+}$ may be aluminum oxide $Al_2O_3$.

Specifically, a rotation speed at which the lathe keeps rotating in the immersion process may be 30 r/min.

Not only the concentration of the erbium ions $Er^{3+}$, but also the concentration of the phosphorus ions $P^{5+}$ and the concentration of the aluminum ions $Al^{3+}$ are increased, so that denser aluminum phosphate AlPO4 can be formed around the erbium ions $Er^{3+}$. In this case, a coordination environment of the erbium ions $Er^{3+}$ is shown in FIG. 3. In this manner, a probability that an erbium ion $Er^{3+}$ transits to a higher energy level can be reduced, thereby suppressing the erbium ion $Er^{3+}$ from absorbing the signal light of the long band of the L-band. In addition, a clustering degree of the erbium ions $Er^{3+}$ can also be reduced.

Optionally, the mixed solution 1 may further include at least one of the following elements: thulium Tm, bismuth Bi, fluorine F, cerium Ce, ytterbium Yb, zirconium Zr, neodymium Nd, and lanthanum La.

Step 4: Pour out the mixed solution 1 after the quartz glass tube has been immersed in the mixed solution 1. Then, perform initial nitrogen $N_2$ drying on the quartz glass tube.

Specifically, the quartz glass tube may be immersed in the mixed solution 1 for three to six hours, and further, the quartz glass tube may be immersed in the mixed solution 1 for five hours.

Step 5: Pass chlorine $Cl_2$ into the initially dried quartz glass tube and heat the quartz glass tube to 600°C to 900°C, to further remove residual hydroxide ions in the soot layer, so that background losses of the EDF are reduced.

Specifically, the hydroxide ions easily have vibration absorption due to great deformability, causing optical signal attenuation of an optical fiber.

Step 6: After further drying is completed, heat the quartz glass tube to 1500°C to 1700°C, sintered the quartz glass tube into a transparent and compact quartz glass rod; and pass gas containing $P^{5+}$ for gas phase compensation, to improve a doping concentration of $P^{5+}$

Specifically, the gas containing $P^{5+}$ may be phosphorus oxychloride $POCl_3$.

Specifically, the foregoing doped elements are fixed in a glass network to form a nonporous glass layer.

Step 7: Draw the sintered quartz glass rod into an optical fiber by using a rod-in-tube technique. A silicate fiber doped with erbium, phosphorus, and aluminum may be obtained by using the foregoing process. A fiber core of the silicate fiber doped with erbium, phosphorus, and aluminum includes $Er_2O_3$, $Al_2O_3$, $P_2O_5$, $Ge_2O_3$, and silicon dioxide $SiO_2$. A mass percentage of the erbium ions $Er^{3+}$ is 0.21%, a mass percentage of the phosphorus ions $P^{5+}$ is 15.2%, a mass percentage of the aluminum ions $Al^{3+}$ is 6.1%, a mass percentage of the germanium ions $Ge^{3+}$ is 6.1%, and the rest is the silicon dioxide $SiO_2$.

For convenience, the optical fiber prepared by using the foregoing process is referred to as an optical fiber 1 below.

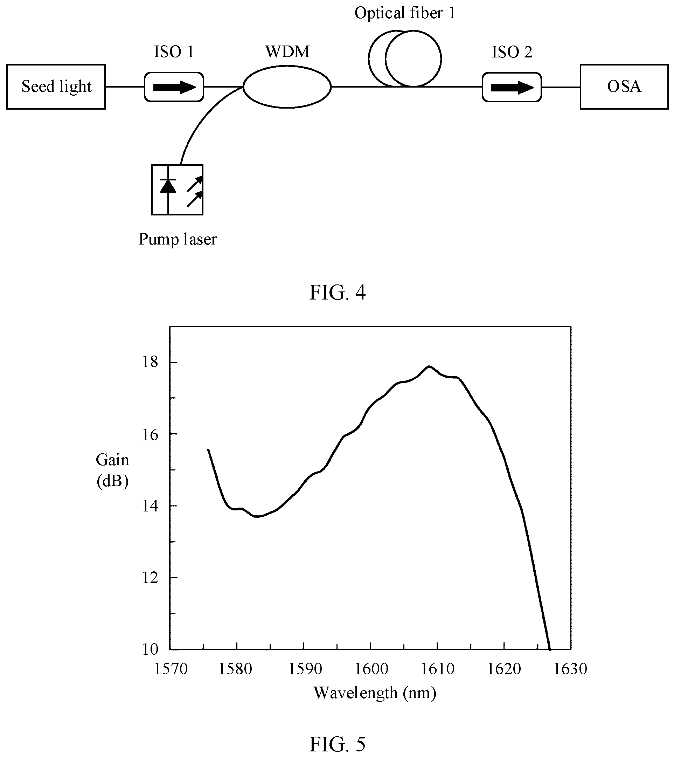

The apparatus shown in FIG. 4 is used to test a gain of the optical fiber 1 for an input optical signal. The apparatus shown in FIG. 4 includes an apparatus for generating seed (seed) light, a pump laser for generating pump light, an optical isolator ISO 1, an optical isolator ISO 2, a wavelength division multiplexer (wavelength division multiplexer, WDM), the optical fiber 1, an optical spectrum analyzer (optical spectrum analyzer, OSA), and the like.

Specifically, the apparatus for generating seed light generates L-band signal light, and the pump laser generates pump light of 980 nm or 1480 nm. The L-band signal light generated by the apparatus for generating seed (seed) light is coupled, in the WDM, with the pump light after passing through the optical isolator ISO 1, and then enters the fiber 1 for gain amplification. The amplified L-band signal light passes through the optical isolator ISO 2 and enters the OSA for testing.

The apparatus shown in FIG. 4 is used to test the obtained gain of the optical fiber 1 for an input optical signal in the L-band. FIG. 5 is an enlarged view of the gain.

It can be learned from FIG. 5 that a high gain of 18 dB may be obtained in the long band of the L-band by using the optical fiber 1.

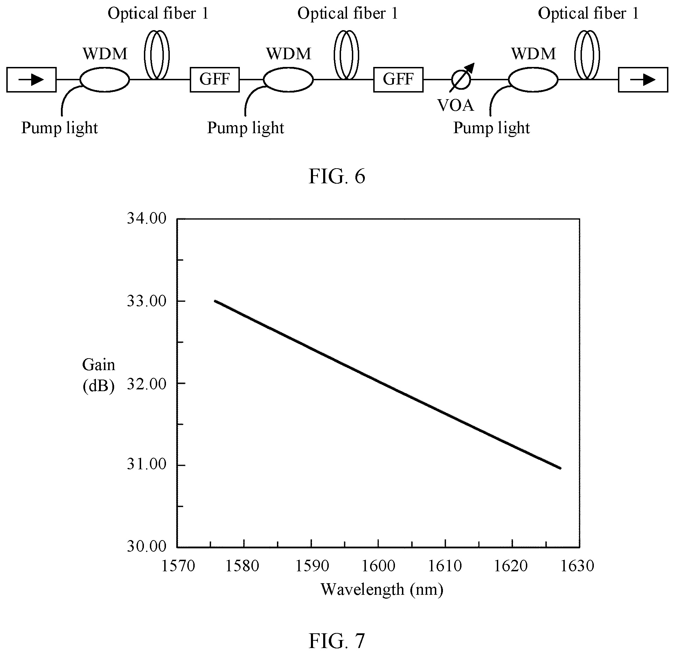

Further, as shown in FIG. 6, a four-stage amplification system is set up based on the apparatus shown in FIG. 4. Each stage of amplification system shown in FIG. 6 is connected by a gain flattening filter (gain flattening filter, GFF), and the GFF is used to flatten or smooth unequal signal strengths output by an upper-stage amplification system.

For example, as shown in FIG. 7, if strength of an L-band signal passed into the four-stage amplification system shown in FIG. 6 is 10 dB, it can be obtained that a gain of the L-band signal may be 30 dB to 32 dB. It can be learned that, the gain of the fiber 1 for the long band of the L band can satisfy a requirement for long-distance use.

This application may further provide another method for preparing an L-band erbium-doped fiber with a high gain and low noise, to implement a wide spectrum and a high gain of the L-band. Optionally, concentrations of the erbium ions $Er^{3+}$, the phosphorus ions $P^{5+}$, and the aluminum ions $Al^{3+}$ in the mixed solution 1 in step 3 of the optical fiber 1 preparation process are respectively adjusted to 0.21 mol/l, 3.5 mol/l, and 5.2 mol/l, and the obtained solution may be denoted as a mixed solution 2. For other steps, refer to other steps of the optical fiber 1 preparation process, and details are not described herein again. For convenience, an optical fiber prepared by using this process is referred to as an optical fiber 2 below.

Optionally, the mixed solution 2 may further include at least one of the following elements: thulium Tm, bismuth Bi, fluorine F, cerium Ce, ytterbium Yb, zirconium Zr, neodymium Nd, and lanthanum La.

By increasing concentrations of the erbium ions $Er^{3+}$, the phosphorus ions $P^{5+}$, and the aluminum ions $Al^{3+}$ in the

optical fiber 2, a non-bridging oxygen bond in quartz of the optical fiber 2 may be increased, a doping location and a micro coordination of the erbium ions $Er^{3+}$ may be adjusted, and a life of the erbium ions $Er^{3+}$ at the metastable-state energy level $^4I_{13/2}$ may be reduced. In this way, the ESA effect of the erbium ions $Er^{3+}$ on the long band of the L-band is reduced.

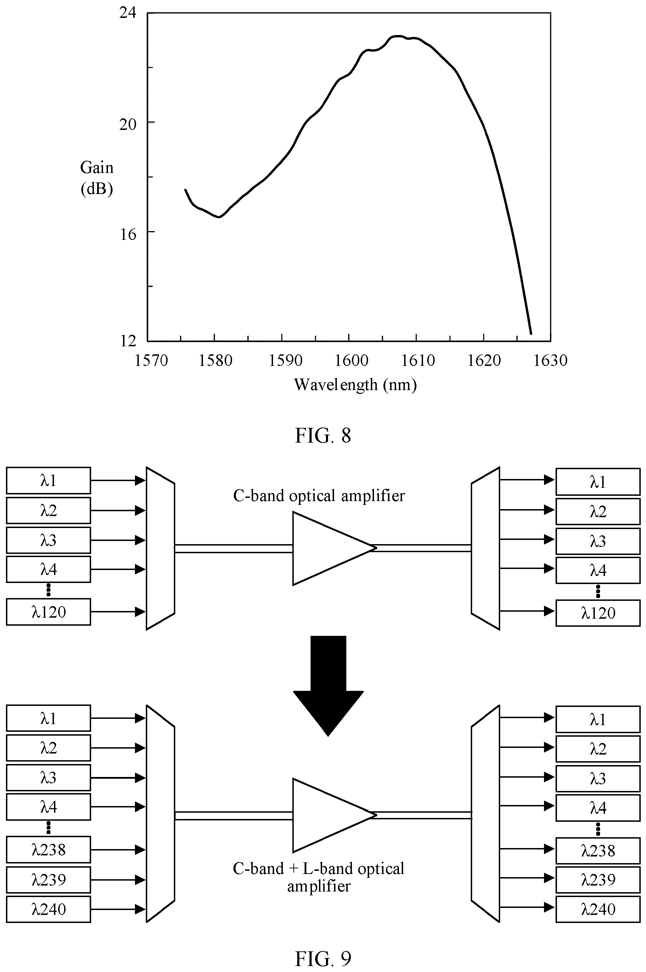

The optical fiber 1 in the apparatus shown in FIG. 4 is replaced with the optical fiber 2. The apparatus shown in FIG. 4 is used to test the obtained gain of the optical fiber 2 for an input optical signal in the L-band. FIG. 8 is an enlarged view of the gain.

It can be learned from FIG. 8 that a high gain of 23 dB may be obtained in the long band of the L-band by using the optical fiber 2. In comparison with the optical fiber 1, the optical fiber 2 can obtain a higher gain.

According to the steps in the foregoing embodiments, mass percentages of doped elements in a fiber core of the optical fiber prepared in this application are as follows: A mass percentage of $Er_2O_3$ is 0.2 wt% to 1%, a mass percentage of $Al_2O_3$ is 0.5 wt% to 20%, a mass percentage of $P_2O_5$ is 2 wt% to 30%, a mass percentage of $Ge_2O_3$ is 0.01 wt% to 30%, and a mass percentage of silicon dioxide $SiO_2$ is greater than 60 wt%.

Concentrations of the erbium ions $Er^{3+}$, the phosphorus ions $P^{5+}$, and the aluminum ions $Al^{3+}$ in the foregoing mixed solution are respectively 0.1 mol/l to 0.3 mol/l, 0.5 mol/l to 4 mol/l, and 1 mol/l to 6 mol/l.

A fiber diameter of the optical fiber prepared in this application may be 1 $\mu$m to 20 $\mu$m, and a numerical aperture may be 0.01 to 1.2.

By using the optical fiber prepared in this application, an optical fiber amplifier covering the long band of the L-band can be obtained, thereby implementing a large-capacity optical fiber transmission technology.

FIG. 9 shows an amplifier system in which an optical fiber prepared according to the preparation method in this application is used in a long-distance or metropolitan dense wavelength division multiplexing (dense wavelength division multiplexing, DWDM) system.

The optical fiber is a core of the amplifier system. The optical fiber prepared according to the preparation method in this application may implement full-coverage gain amplification in an L-band in the amplifier system shown in FIG. 9. In addition, the foregoing amplifier system including an optical fiber having a gain characteristic of the long band of the L-band is an important means for implementing large-capacity optical fiber communication transmission.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraint conditions of technical solutions. A person skilled in the art may use different methods to implement the described functions for each particular application, but it should not be considered that the implementation goes beyond the scope of this application. In the several embodiments provided in this application, it should be understood that the disclosed system, apparatus, and method may be implemented in other manners. For example, the described apparatus embodiments are merely an example. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Claims

1. An optical fiber, wherein the optical fiber is used in an optical fiber amplifier, the optical fiber is configured to amplify an optical signal,
   a fiber core of the optical fiber comprises the element erbium, the element aluminum, and the element phosphorus, and aluminum phosphate is formed around the element erbium.

2. The optical fiber according to claim 1, wherein a mass percentage of the element erbium is 0.2% to 1%, a mass percentage of the element aluminum is 0.5% to 20%, and a mass percentage of the element phosphorus is 2% to 30%.

3. The optical fiber according to claim 1 or 2, wherein the mass percentage of the element erbium is 0.2% to 0.6%, the mass percentage of the element aluminum is 6% to 11%, and the mass percentage of the element phosphorus is 15% to 22%.

4. The optical fiber according to any one of claims 1 to 3, wherein the mass percentage of the element erbium is 0.2% to 0.3%, the mass percentage of the element aluminum is 6% to 7%, and the mass percentage of the element phosphorus is 15% to 16%.

5. The optical fiber according to any one of claims 1 to 3, wherein the mass percentage of the element erbium is 0.5% to 0.6%, the mass percentage of the element aluminum is 10% to 11%, and the mass percentage of the element phosphorus is 21% to 22%.

6. The optical fiber according to any one of claims 1 to 5, wherein the fiber core further comprises at least one of the following elements:
   germanium Ge, silicon Si, thulium Tm, bismuth Bi, fluorine F, cerium Ce, ytterbium Yb, zirconium Zr, neodymium Nd, and lanthanum La, wherein a mass percentage of the element germanium is 0.01% to 30%, and a mass percentage of the element silicon is greater than 60%.

7. The optical fiber according to any one of claims 1 to 6, wherein a fiber diameter of the optical fiber is 1 $\mu$m to 20 $\mu$m, and a numerical aperture of the optical fiber is 0.01 to 1.2.

8. An optical fiber preparation method, comprising:

   depositing a loose layer on an inner wall of a quartz glass tube;
   immersing, in a first solution, the quartz glass tube on which the loose layer is deposited, to allow elements in the first solution to penetrate into the loose layer, wherein the first solution comprises the element erbium, the element aluminum, and the element phosphorus, a concentration of the element erbium is 0.1 mole per liter to 0.3 mole per liter, a concentration of the element aluminum is 1 mole per liter to 6 moles per liter, and a concentration of the element phosphorus is 0.5 mole per liter to 4 mole per liter;
   sintering the quartz glass tube that has been immersed in the first solution, to dope the elements in the first solution into the quartz glass tube; and
   drawing the sintered quartz glass tube into an optical fiber.

9. The method according to claim 8, wherein the concentration of the element erbium in the first solution is 0.1 mole per liter to 0.3 mole per liter, the concentration of the element aluminum is 3 moles per liter to 6 moles per liter, and the concentration of the element phosphorus is 2 moles per liter to 4 moles per liter.

10. The method according to claim 8 or 9, wherein the concentration of the element erbium in the first solution is 0.1 mole per liter to 0.2 mole per liter, the concentration of the element aluminum is 3 moles per liter to 4 moles per liter, and the concentration of the element phosphorus is 2 moles per liter to 3 moles per liter.

11. The method according to claim 8 or 9, wherein the concentration of the element erbium in the first solution is 0.2 mole per liter to 0.3 mole per liter, the concentration of the element aluminum is 5 moles per liter to 6 moles per liter, and the concentration of the element phosphorus is 3 moles per liter to 4 moles per liter.

12. The method according to any one of claims 8 to 11, wherein the first solution further comprises at least one of the following elements:
    thulium Tm, bismuth Bi, fluorine F, cerium Ce, ytterbium Yb, zirconium Zr, neodymium Nd, and lanthanum La.

13. The method according to any one of claims 8 to 12, wherein a fiber diameter of the optical fiber is 1 $\mu$m to 20 $\mu$m, and a numerical aperture of the optical fiber is 0.01 to 1.2.

14. The method according to any one of claims 8 to 13, wherein the immersing, in a first solution, the quartz glass tube on which the loose layer is deposited comprises:
immersing, in the first solution for three to six hours, the quartz glass tube on which the loose layer is deposited.

15. The method according to any one of claims 8 to 14, wherein the sintering the quartz glass tube that has been immersed in the first solution comprises:
sintering, in an oxygen atmosphere, the quartz glass tube that has been immersed in the first solution, wherein a temperature of the sintering is 1400 degrees Celsius to 1900 degrees Celsius.

16. The method according to claim 15, wherein the sintering the quartz glass tube that has been immersed in the first solution comprises:
sintering, in an atmosphere containing the element phosphorus, the quartz glass tube that has been immersed in the first solution.

17. An optical fiber amplifier, comprising an optical fiber for amplifying an optical signal, wherein the optical fiber is the optical fiber according to any one of claims 1 to 7.

FIG. 1

EP 4 625 008 A1

O₂

POCl₃ GeCl₄ SiCl₄

Quartz glass tube

Oxy-hydrogen torch

FIG. 2

Non-bridging oxygen

AlPO₄

Bridging oxygen

Al⁴⁺

P⁵⁺

Er³⁺

Si

FIG. 3

FIG. 4

FIG. 5

Optical fiber 1    Optical fiber 1    Optical fiber 1

WDM    WDM    WDM

GFF    GFF    VOA

Pump light    Pump light    Pump light

FIG. 6

FIG. 7

FIG. 8

FIG. 9

## INTERNATIONAL SEARCH REPORT

| International application No. |
|---|
| **PCT/CN2023/138832** |

### A. CLASSIFICATION OF SUBJECT MATTER

G02B6/02(2006.01)i;  H01S3/067(2006.01)i

According to International Patent Classification (IPC) or to both national classification and IPC

### B. FIELDS SEARCHED

Minimum documentation searched (classification system followed by classification symbols)

IPC:G02B,H01S

Documentation searched other than minimum documentation to the extent that such documents are included in the fields searched

Electronic data base consulted during the international search (name of data base and, where practicable, search terms used)

CNABS, CNTXT: 掺铒光纤, 铝离子, 铝元素, 三氧化二铝, 磷元素, 磷离子, 五氧化二磷, 磷酸铝, 沉积, 浸泡, 浸渍, 烧结, 浓度; VEN, USTXT, EPTXT: Erbium Doped Fiber, EDF, aluminum ions, aluminum elements, aluminum oxide, phosphorus elements, phosphorus atoms, phosphorus pentoxide, aluminum phosphate, deposition, soaking, impregnation, sintering, concentration

### C. DOCUMENTS CONSIDERED TO BE RELEVANT

| Category* | Citation of document, with indication, where appropriate, of the relevant passages | Relevant to claim No. |
|---|---|---|
| X | CN 115113325 A (HUAWEI TECHNOLOGIES CO., LTD.) 27 September 2022 (2022-09-27) description, paragraphs 30-56, and figures 1-7 | 1-7, 17 |
| Y | CN 115113325 A (HUAWEI TECHNOLOGIES CO., LTD.) 27 September 2022 (2022-09-27) description, paragraphs 30-56, and figures 1-7 | 8-16 |
| X | CN 114180823 A (WUHAN CHANGJIN LASER TECHNOLOGY CO., LTD.) 15 March 2022 (2022-03-15) description, paragraphs 19-53, and figures 1-4 | 8-16 |
| Y | CN 114180823 A (WUHAN CHANGJIN LASER TECHNOLOGY CO., LTD.) 15 March 2022 (2022-03-15) description, paragraphs 19-53, and figures 1-4 | 8-16 |
| A | CN 113800774 A (SOUTH CHINA UNIVERSITY OF TECHNOLOGY) 17 December 2021 (2021-12-17) entire document | 1-17 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 March 2024** | **06 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/138832** |

### C.    DOCUMENTS CONSIDERED TO BE RELEVANT

| Category* | Citation of document, with indication, where appropriate, of the relevant passages | Relevant to claim No. |
|---|---|---|
| A | JP H06216439 A (NIPPON TELEGRAPH & TELEPHONE CORP.) 05 August 1994 (1994-08-05) entire document | 1-17 |
| A | KR 20070078031 A (OPTOMAGIC CO., LTD.) 30 July 2007 (2007-07-30) entire document | 1-17 |

Form PCT/ISA/210 (second sheet) (July 2022)

**INTERNATIONAL SEARCH REPORT**
Information on patent family members

International application No.

**PCT/CN2023/138832**

| Patent document cited in search report | | | Publication date (day/month/year) | Patent family member(s) | | | Publication date (day/month/year) |
|---|---|---|---|---|---|---|---|
| CN | 115113325 | A | 27 September 2022 | CN | 115113325 | B | 03 November 2023 |
| | | | | WO | 2022199398 | A1 | 29 September 2022 |
| | | | | US | 2024014626 | A1 | 11 January 2024 |
| | | | | EP | 4300146 | A1 | 03 January 2024 |
| CN | 114180823 | A | 15 March 2022 | CN | 114180823 | B | 20 May 2022 |
| CN | 113800774 | A | 17 December 2021 | CN | 113800774 | B | 21 October 2022 |
| JP | H06216439 | A | 05 August 1994 | | None | | |
| KR | 20070078031 | A | 30 July 2007 | KR | 100837792 | B1 | 13 June 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211649609